# EUROPEAN PATENT SPECIFICATION

(11) **EP 3 433 715 B1**
(45) Date of publication and mention of the grant of the patent: **06.12.2023**
(21) Application number: 17714383.1
(22) Date of filing: 22.03.2017
(51) Int. Cl.: G06F 3/06, G06F 11/14, G06F 16/11, G06F 16/174, G06F 16/182

(54) **OBJECT-BASED STORAGE REPLICATION AND RECOVERY**
OBJEKTBASIERTE SPEICHERREPLIKATION UND -WIEDERHERSTELLUNG
RÉPLICATION ET RÉCUPÉRATION DE STOCKAGE SUR LA BASE D'OBJETS

(30) Priority: 25.03.2016 US 201615081520
(43) Date of publication of application: 30.01.2019
(73) Proprietor: NetApp, Inc., Sunnyvale, CA 94089 (US)
(72) Inventor: SHEKHAR, Sisir, Bangalore 560071 (IN); EISLER, Michael, R., Colorado Springs, CO 80919 (US); MUTHYALA, Kartheek, Bengaluru 560103 (IN); KUMAR, Ranjit, Santa Clara, CA 95051 (US)
(74) Representative: Carpmaels & Ransford LLP
(86) International application number: PCT/US2017/023525
(87) International publication number: WO 2017/165483

(56) References cited:
- EP-A2- 2 615 566
- US-A1- 2011 016 085
- US-A1- 2014 195 490
- US-A1- 2015 134 708
- US-B1- 7 827 349

## Description

### TECHNICAL FIELD

The disclosure generally relates to the field of storage systems, and more particularly to logical replication of file system storage to object-based storage.

### BACKGROUND

Many cloud storage solutions utilize object-based storage (OBS) as the data layout paradigm. In contrast to file systems that utilize hierarchical directory namespaces, OBS typically employs a flat namespace allocated within a given logical container (sometimes referred to as bucket). In a cloud environment, an account may be associated with a logical container that contains variable sized data constructs (i.e., objects) that contain data and metadata based on a configuration of the logical container.

OBS is a scalable system for storing and managing data objects without using hierarchical naming schemas, thus avoiding the need to resolve pointers in traversing the organization levels to retrieve user data. OBS systems integrate, or "ingest," variable size data items as objects having unique ID keys into a flat name space structure. Object metadata is stored with the objects themselves rather than in a separate metadata structure. Objects can be accessed and retrieved using key-based searching implemented via a web services interface such as one based on the Representational State Transfer (REST) architecture or Simple Object Access Protocol (SOAP). This allows applications to directly access objects across a network using "GET" and "PUT" commands without having to process more complex file system and/or block access commands.

Preservation of storage efficiency mechanisms such as deduplication when replicating file system data to OBS presents several challenges due to fundamental differences in data layout structure and naming schemas.

United States patent application US 2011/0016085 discloses a system and method for maintaining multiple inode containers for managing file system objects in a single logical volume of a network storage server. United States patent application US 2015/0134708 discloses an apparatus and a method for updating map structures in an object storage system.

European patent application EP 2,615,566 discloses a method and system for providing unified local storage support for file and cloud access.

### SUMMARY

Techniques for managing file system entities in an OBS system are disclosed. The invention is defined by the appended claims.

### BRIEF DESCRIPTION OF THE DRAWINGS

Embodiments of the disclosure may be better understood by referencing the accompanying drawings.
**FIG. 1A** is a block diagram depicting a storage replication system that preserves file system deduplication efficiency in accordance with an embodiment;
**FIG. 1B** is a block diagram illustrating portions of the storage replication system depicted in **FIG. 1A** that may be utilized to enable read-only access to OBS objects in accordance with an embodiment;
**FIG. 2** is a block diagram illustrating subsystems and components for processing replication streams including point-in-time image (PTI) replication streams in accordance with an embodiment;
**FIG. 3** is a flow diagram depicting operations and functions performed during replication of file system entities in accordance with an embodiment;
**FIG. 4** is a flow diagram illustrating operations and functions performed for translating between file system block-level access and OBS object access in accordance with an embodiment; and
**FIG. 5** depicts an example computer system with an object-based replication and recovery appliance in accordance with an embodiment.

### DESCRIPTION

The description that follows includes example systems, methods, techniques, and program flows that depict embodiments of the disclosure. However, it is understood that this disclosure may be practiced without some of these specific details. In other instances, well-known instruction instances, protocols, structures and techniques have not been shown in detail in order not to obfuscate the description.

A file system includes the data structures and methods/functions used to organize file system entities (e.g., directories, files, inodes, etc.), access file system entities, and maintain a namespace of the file system. When stored as objects in object-based storage (OBS), file system entities are referred to as objects. Thus, an "inode object" is an object that corresponds to an inode file system entity, an "inode file object" is an object that corresponds to an inode file, etc.

In a hierarchical file system, as described herein, the file system structure is represented by a hierarchical set of data structures. The data structures generally include at least an inode file containing multiple inode data structures, or inodes. An inode file comprises a set of file blocks, each of which is assigned an index, referred to herein as an inode file file block number (FBN). Thus, a first file block in an inode file may be assigned an inode file FBN of "0", a second file block in the inode file might be assigned an inode file FBN of "1", etc.

Each file block within an inode file comprises a set of inodes, each of which is assigned an index, referred to herein as an inode number. As an inode file FBN is used to identify a file block within an inode file, an inode number is used to identify an inodes across the inode file. The FBNs used to identify file blocks and inodes may also indicate the sequential position of the respective data structure within the parent data structure, but this is not required.

An inode is a data structure that comprises metadata about a file system entity (e.g., a directory or file) and block pointers. The block pointers are assigned an index, referred to herein as a data FBN, which is used to identify the block pointer within the inode. A block pointer maps the data FBN identifying the block pointer to a data block number. The data block number is a logical block address (e.g., a volume block number) that maps to a physical block address (e.g., an aggregate block number and/or a disk block number). The physical block referenced by the physical block address can include another inode or actual file data.

As utilized herein, a "data block number" refers to a logical block address (e.g., volume block number) that may be mapped by a reference pointer to a physical block address (e.g., a data block, such as an aggregate block number and/or a disk block number) at which file data content is physically stored. In addition or alternatively, a "data block number" may refer to an aggregate block address (e.g., physical volume block number) or a physical storage media block number (e.g., block address of a hard disk, solid state drive, etc.).

Techniques are disclosed for replicating data that is stored in a hierarchical file system format to a backup storage that is configured to store data in an OBS format. In an embodiment, an object-based data layout is utilized to replicate data from a file system (e.g., Unix-based file system) to OBS (e.g., cloud-provisioned OBS). The object-based data layout enables the backup storage system to store the backup data in an object based format while preserving file system storage efficiency mechanisms such as deduplication and/or compression.

In an embodiment, the primary (source) data is initially replicated in a comprehensive baseline replication cycle in which file system data is mapped into multiple categories of OBS objects. Such categories include inode file objects, indirection objects, and data objects. During mapping, file system data structures are selectively parsed for mapping into one or more of the multiple OBS object categories.

Subsequent to the baseline replication, a stream of file system entities to be replicated may comprise a point-in-time image (PTI) of the file system that records the state of the file system at a particular point. For example, a PTI may embody a file system "snapshot" such as implemented by some file systems that utilize inode-based pointer resolution to track files. Such snapshot-type PTls record the state of the file system and therefore typically comprise a copy of the root inode of the file system in addition to block pointer information. In an embodiment, an OBS container may receive new objects mapped from a series of PTI replication streams that are periodically sent to the secondary OBS system. A PTI replication stream includes inodes and corresponding indexed file system entities (e.g., files and directories) that have been added or modified since a previous PTI replication. The file system entities may include deduplicated data blocks (i.e., data blocks referenced by two or more block pointers). The PTI replication stream may comprise diff streams that are packaged by a replication engine into sparse objects and stored in OBS using REST/HTTP application program interfaces (API's). The sparse objects may be represented as reference objects that may be used as indices to access corresponding data objects including data objects generated from deduplicated data blocks.

The replication engine may be implemented as a virtual machine (VM) that is configured to receive replication data streams from primary/source storage. The replication engine may include a parser configured to identify different data and metadata file system constructs from among the file system entities constituting a replication data stream. In one embodiment, the parser identifies inode data structures (inodes) within the replication data stream. Within the inodes, the parser may further identify attribute metadata and reference data in the form of pointers that associate data FBNs with data block numbers (DBNs). The parser may further identify data content in the form of data blocks within the replication stream. An object generator receives the parsed replication stream data and generates OBS objects therefrom, including attribute level objects, reference level objects, and data content objects.

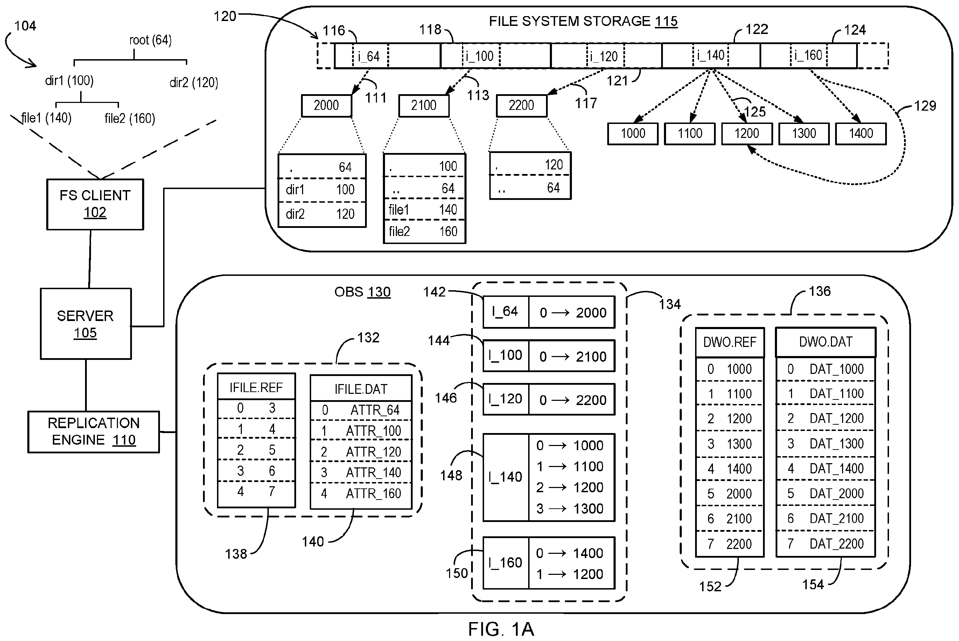

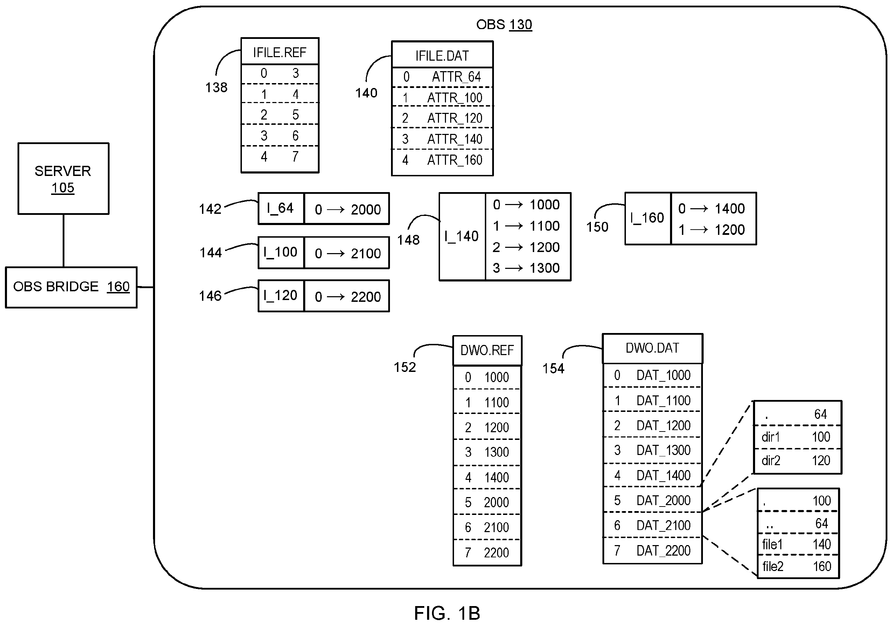

**FIG. 1** is a block diagram depicting a storage backup system that preserves file system deduplication efficiency in accordance with an embodiment. The depicted storage backup system includes a primary storage system comprising a storage server **105** having a file system storage **115.** A file system client **102** is communicatively coupled to storage server **105** via a network connection. File system client **102** includes a memory into which a file system image **104** has been loaded. The file system image **104** includes data structures, referred to herein as file system entities, of a hierarchical file system such may be implemented by a Unix-type operating system such as Linux^{®}. Specifically, the file system image **104** comprises a top-level/root directory, *root,* containing lower level directories *dir1* and *dir2.* In the depicted embodiment, *dir2* contains no files and *dir1* contains files *file1* and *file2.* Shown within parentheses besides each of the file system entities are inode numbers that are assigned to respective inodes of the file system and correspond to the respective file system entities. The inode numbers may be used by the file system to identify the location of the inode data (e.g., by using a data structure that maps the inode number to an inode file FBN). In this manner, the inode numbers are essentially index numbers used in inode-based file systems to index file system entities in a manner enabling dereferencing of file system entity metadata and file system entity data content.

File system storage **115** contains the metadata, block pointer reference information, and data content that a storage server operating system (not depicted) uses to store and manage data. Namely, file system storage **115** includes an inode file **120** that includes inodes for recording the metadata and reference information for files and directories within the file system. File system storage **115** also includes corresponding data blocks having data block numbers 2000, 2100, 2200, 1000, 1100, 1200, 1300, and 1400. The metadata and reference information is recorded in multiple inodes, such as inodes *i_64, i_100, i_120, i_140,* and *i_160* that are contained as data structures within file blocks **116, 118, 121, 122,** and **124** of inode file **120.** Each inode may consume a specified amount of storage space (e.g., 192 bytes) within storage blocks that may have fixed length (e.g., 4KB). For example, assuming a block size of 4KB with each inode consuming 192 bytes, a total of 21 inodes may be contained in each block. In such a configuration, the inode file block numbers (FBNs) for inodes *i_64, i_100, i_120, i_140,* and *i_160* are 3, 4, 5, 6, and 7, respectively. Each inode contains metadata and references (e.g., block pointers) for the file system entity that it represents.

Each of file blocks **116, 118, 121, 122,** and **124** is assigned an inode file FBN, as described above. In the depicted example, the file blocks **116, 118, 121, 122,** and **124** are assigned inode file FBNs "3," "4," "5," "6," and "7," respectively. The depicted numeric references in each of the inode names designates the inode's file index number (inode number). For example, the inode number of *i_64* is 64, the inode number for *i_120* is 120, and similarly for the remaining inodes. As known in typical inode-based file systems, the inode numbers are unique file index numbers utilized to uniquely index the underlying files and directories within a file system.

While implementations of inode-based file systems may often utilize multiple reference levels (e.g., using double indirect pointers) for large files, only a single level is depicted in **FIG. 1** for ease of illustration. Furthermore, while many inode-based file systems may implement storage virtualization in which a virtual volume blocks are mapped to physical volume blocks (e.g., within an aggregate), such virtual-to-physical volume mappings are not essential to the principles described herein and are therefore not depicted.

The metadata contained within inodes may include file/directory attributes such as type (file or directory), size, creation time, modification time, and access control information, etc. As part of or in addition to the metadata, inodes for directories and files include reference information in the form of block pointers to data blocks that contain the respective directory/file data content. The enumerated block pointers, such as block pointer **111,** are contained within designated sections of each of the inodes and comprise mappings from data FBNs of the indexed file system entity to DBNs. For instance, inode *i_64* includes a pointer **111** from data FBN 0 of the root directory to DBN 2000. Similarly, inodes *i_100* and *i_120* include pointers **113** and **117** from their respective data FBN 0 to DBNs 2100 and 2200, respectively.

The content of directory data blocks comprises mappings from a parent directory to the directory inode number and also mappings from names of any children file system entities (directories and files) to their respective inode numbers. For instance, the content of the root directory, contained within DBN 2000, is depicted as including mappings from the root directory name "." to inode number 64, from *dir1* to inode number 100, and from *dir2* to inode number 120. Similarly, the content of *dir1,* contained within DBN 2100, is depicted as including its own name-to-inode number mapping as well as mappings from its parent directory name to inode number 64, from *file1* to inode number 140, and from *file2* to inode number 160. The content of the file data blocks, such as the data blocks assigned DBNs 1000, 1100, 1200, 1300, and 1400, contain the file data content. As shown in **FIG. 1****,** file inodes *i_140* and *i_160* each include pointers to multiple DBNs, with inode *i_140* pointing to DBNs 1000, 1100, 1200, and 1300, and inode *i_160* pointing to DBNs 1400 and 1200. In this manner, *file1* (via inode *i_140*) and *file2* (via inode *i_160*) share DBN 1200 by including respective pointers 125 and 129 that point to the same DBN 1200 such as may occur in a case of deduplication if the data content of DBN 1200 was determined be identical to the data content of another data block.

The depicted primary storage system further comprises a replication engine **110** for processing file system entities received from file system storage **115** such as during data backup to a secondary storage system depicted in **FIG. 1** as OBS **130.** The processing of replication engine **110** provides file system to OBS mapping in a manner that preserves storage efficiency that may be attained via techniques such as deduplication and/or compression. Replication engine **110** includes a parser (not depicted) that processes replication streams received from storage server **105** to identify various categories of file system constructs to be used in generating corresponding OBS objects. In an embodiment, replication engine **110** identifies one or more of inodes *i_64, i_100, i_120, i_140,* and *i_160* that may be included in a replication stream. In response to detecting the inodes, such as may occur during a baseline file system replication, replication engine **110** generates one or more corresponding OBS objects. In the depicted embodiment, replication engine **110** generates a set of inode file objects **132** that contain the file/directory attribute metadata information contained by the corresponding inodes. Inode file objects **132** further record the inode file FBNs of the file blocks of inode file **120,** and logically associate the inode file FBNs with corresponding inode numbers.

The inode file objects **132** include an inode reference object **138** and an inode data object **140.** As shown in **FIG. 1****,** inode reference object **138** includes an object ID, IFILE.REF, that may be used as an access key to the object within OBS **130.** Inode reference object **138** further includes data content in the form of multiple consecutive indexed entries 3, 4, 5, 6, and 7, respectively corresponding to the inode file FBNs of the file blocks **116, 118, 121, 122,** and **124** that respectively contain inodes *i_64, i_100, i_120, i_140,* and *i_160.* Entries 3, 4, 5, 6, and 7 are indexed using a numeric sequence 0, 1, 2, 3, and 4. Inode data object **140** includes an object ID, IFILE.DAT, that may be used as an access key to the object within OBS **130.** Inode data object **140** further includes data content in the form of multiple consecutive indexed entries represented in **FIG. 1** as ATTR_64, ATTR_100, ATTR_120, ATTR_140, and ATTR_160. While not expressly shown in the depicted embodiment, each of the IFILE.DAT entries contains the inode number and attribute metadata of the respective underlying file system entity (e.g., file or directory) represented by inodes *i_64, i_100, i_120, i_140,* or *i_160.* Similar to the IFILE.REF entries, entries ATTR_64, ATTR_100, ATTR_120, ATTR_140, and ATTR_160 are indexed using a numeric sequence 0, 1, 2, 3, and 4. The correspondence of the indexing of inode reference object **138** and inode data object **140** provides logical associations between the inode file FBNs within IFILE.REF and the inode numbers and metadata within IFILE.DAT.

In addition to detecting and mapping the inode metadata into OBS objects, replication engine **110** may detect or otherwise identify the block pointer references contained in each of the inodes. For instance, replication engine **110** may identify pointers from an FBN of the root directory (represented by inode *i*_64) to DBN 2000. Similarly, replication engine **110** identifies the pointers from the FBNs of *dir1* and *dir2* (represented by inodes *i_100* and *i_120*) to DBNs 2100 and 2200, respectively. Replication engine **110** also identifies the reference pointers from FBNs of file *file1* to DBNs 1000, 1100, 1200, and 1300, and from the FBNs of *file2* to DBNs 1400 and 1200.

Having identified the reference pointers within the inodes received in the replication stream, replication engine **110** generates a set of one or more indirection objects **134** that each logically associate FBNs of the file system entities represented by the inodes with respective ones of DBNs that correspond to the data blocks received in the replication stream. Specifically, the set of indirection objects **134** comprises indirection objects **142, 144, 146, 148,** and **150** that respectively include object IDs i_64, i_100, i_120, i_140, and i_160, which correspond to the inode numbers of the inodes and are used as access keys to the object within OBS **130.** In addition to having an object ID corresponding to an inode number, each of the indirection objects includes one or more data entries that each logically associates a FBN of an indexed file system entity with a corresponding DBN. For example, indirection object **144** includes an object ID I_100 corresponding to inode number 100 and further including a single data entry embodied as a pointer from FBN 0 of *dir1* to DBN 2100. Indirection object **148** includes an object ID i_140 corresponding to inode number 140 and further includes data entries (pointers) that logically associate data FBNs 0, 1, 2, and 3 of *file1* with DBNs 1000, 1100, 1200, and 1300, respectively.

During baseline replication, replication engine **110** further detects the data content of file system entities such as the content of *dir1, dir2, file1,* and *file2* and generates a set of one or more corresponding data objects **136.** Data objects **136** contain the data blocks received in the replication stream and also record and logically associate data block numbers with the data blocks. In the depicted embodiment, the data objects **136** include a data reference object **152** and a data content object **154.** Data reference object **152** includes an object ID, DWO.REF, that may be used as an access key to the object within OBS **130.** Data reference object **152** further includes data content in the form of multiple consecutive indexed entries 1000, 1100, 1200, 1300, 1400, 2000, 2100, and 2200, which respectively correspond to the DBNs of the data blocks received in the replication stream. As shown, the entries are individually indexed using a numeric sequence 0-7. Data content object **154** includes an object ID, DWO.DAT, that may be used as an access key to the object within OBS **130.** Data content object **154** further includes data content in the form of multiple consecutive indexed entries represented in **FIG. 1** as DAT_1000, DAT_1100, DAT_1200, DAT_1300, DAT_1400, DAT_2000, DAT_2100, and DAT_2200. While not expressly depicted, the DWO.DAT entries each contain the file content data of a data block contained within the respective underlying file system entity. Similar to the DWO.REF entries, the DWO.DAT entries are indexed using the numeric sequence 0 - 7. The correspondence of the indexing of data reference object **152** and data content object **154** provides logical associations between the file system entities' DBNs and the respective data blocks.

In the foregoing manner replication engine **110** effectuates logical replication of the file system structures within file system storage **115** into an OBS format within OBS **130.** Storage efficiency mechanisms such as deduplication are preserved, in part by preserving the primary (sources) FBN-to-DBN mappings in the indirection objects **134.**

**FIG. 1B** is a block diagram illustrating portions of the storage replication system depicted in **FIG. 1A** that may be utilized to enable read-only access to OBS objects within OBS **130** in accordance with an embodiment. As shown in **FIG. 1A****,** the storage server **105** is configured to communicate with an OBS bridge **160** that may be incorporated within replication engine **110** or as a logically distinct entity with separate logical and physical connectivity. OBS bridge 160 is configured, using any combination of coded software, firmware, and/or hardware, to translate, such as by code mapping or otherwise, file system read commands into equivalent OBS commands (e.g., GET command). Given that the depicted OBS **130** comprises the OBS data layout described with reference to **FIG. 1A****,** the mapping performed by OBS bridge **160** includes parsing operands (e.g., file pathname) as well as operations (e.g., READ). As part of its mapping function, OBS bridge **160** may generate a path name-dependent series of OBS commands that traverses the inode file objects, indirection objects, and data objects in a manner enabling effective block-level access from a source side client.

For example, server **105** may issue a READ command to OBS bridge **160** requesting that FBNs 2 and 3 of *file1* be read from OBS **130.** Parsing the request, OBS bridge **160** identifies *file1* as the target and, in response, uses the IFILE.REF key to access inode file reference object **138** and locate the inode file FBN 3 containing the inode 64 that represents the root directory. Determining the index position, 0, of the FBN 3 entry, OBS bridge **160** uses the IFILE.DAT key to access inode file data object **140.** Using the determined index position of FBN 3 (index 0), OBS bridge **160** locates and reads the corresponding inode metadata entry, ATTR_64, within data object **140.** OBS bridge **160** determines the inode number "64," from the metadata and applies the key name i_64, to identify and access indirection object **142.** OBS bridge **160** reads the block pointer information that identifies DBN 2000 as containing the directory content. Next, OBS bridge **160** uses the DWO.REF key to access data reference object **152** and determine the indexed position of DBN 2000 therein. Having determined that DBN 2000 is indexed at position "5" within DWO.REF, OBS bridge uses the DWO.DAT key to access data content object **154** and applies the indexed position "5" of DBN 2000 to locate DAT_2000, which in **FIG. 1B** represents the data content of the root directory. As depicted, DAT_2000 comprises an entry associating the root directory name with inode number 64 and entries associating *dir1* and *dir2* with inode numbers 100 and 120, respectively. OBS bridge **160** uses pathname information to select the *dir1* entry and identify the corresponding inode number, 100.

Having traversed all three OBS levels to resolve the inode number 100 of the directory *dir1* containing *file1*, OBS bridge **160** returns to inode file reference object **138** to identify the inode file FBN 4 in which inode **100** is contained. The determination of the inode file FBN may be based on a pre-specified mapping between inode numbers and inode file FBNs such as based on the aforementioned allocation of 21 inodes per file block within the inode file. OBS bridge **160** uses the indexed position, "1," of inode file FBN 4 to locate and read the corresponding inode metadata content entry, ATTR_100, within inode file data object **140.** The inode number 100 is then used by OBS bridge **160** as an object key to access and read the block pointer content of indirection object **144.** The block pointer 2100 is identified and used by OBS bridge **160** to locate the indexed position "6" within data reference object **152,** which OBS bridge **160** uses to locate and read the *dir1* data content, DAT_2100, within data content object **154.** As shown, the data content includes entries that associate the directory and parent directories with inode numbers 64 and 100 and also entries that associate filenames *file1* and *file2* with inode numbers 140 and 160, respectively. OBS bridge **160** uses pathname information to select the *file1* entry and identify 140 as the inode number to search for.

OBS bridge **160** then uses inode number 140 to determine the corresponding inode file FBN 6, which is then located within inode file reference object **138** to determine an index position "3" that is used to locate the metadata entry, ATTR_140, within inode file data object **140.** OBS bridge **160** then reads the content of indirection object **148** and uses the original READ command information specifying FBNs 1 and 2 to identify corresponding DBN entries DAT_1100 and DAT_1200 within data content object **154** based on the block pointers.

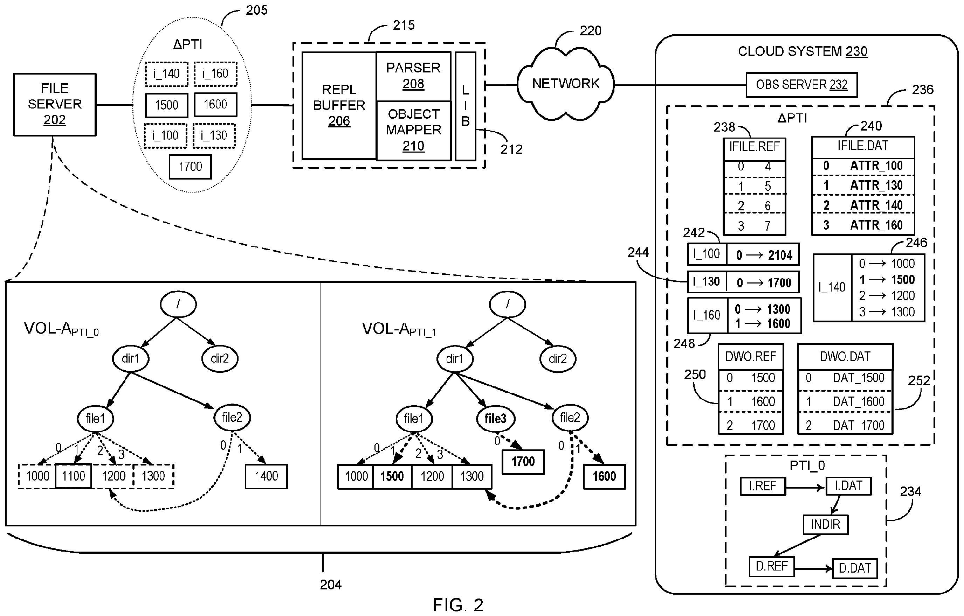

**FIG. 2** is a block diagram illustrating subsystems and components for processing replication streams including point-in-time image (PTI) replication streams in accordance with an embodiment. The system shown in **FIG. 2** includes a file server **202** that provides shared network access to a file system storage volume **204.** Storage volume **204** may include some or all of the inode-based structural aspects depicted and described with reference to **FIG. 1****,** and includes a baseline PTI, VOL-A_{PTI_1}, which represents the active file system volume. Storage volume **204** further includes inode and block pointer structures that form a previous PTI (e.g., snapshot), VOL-A_{PTI_0}. As utilized herein, a PTI, is essentially a point-in-time copy of a file system and/or a point-in-time copy of the state of the file system. PTls may be generated periodically and/or based on system events or conditions to provide a level of data protection and recovery capacity.

The VOL-A_{PTI_0} PTI includes inodes and the file system entities indexed and otherwise represented by the inodes depicted in **FIG. 2** as a hierarchical pointer tree beginning with the root directory "/". Similar to the structure of file system storage **115** in **FIG. 1****,** the file system tree structure embodied by the VOL-A_{PTI_0} PTI includes a pair of directories, *dir1* and *dir2,* contained within the root directory, and further includes a pair of files, *file1* and *file2,* contained within *dir1.* Only the data blocks for file-type file system entities are expressly depicted in **FIG. 2****.** As shown, the VOL-A_{PTI_0} PTI for *file1* includes pointers from FBNs 0, 1, 2, and 3 to DBNs 1000, 1100, 1200, and 1300, respectively. The VOL-A_{PTI_0} PTI for *file2* includes pointers from FBNs 0 and 1 to DBNs 1200 and 1400, respectively.

The file system storage volume **204** has been modified in several ways from the point in time at which the VOL-A_{PTI_0} PTI was generated to the current baseline image VOL-A_{PTI_1}. The changes include a modification to FBN 1 of *file1* (e.g., resulting from a WRITE operation) that results in the corresponding inode block pointer being modified to point to the new data at the new DBN 1500. No other change being made to *file1* from the VOL-A_{PTI_0} PTI to the VOL-A_{PTI_1} PTI (i.e., active image), the unmodified data blocks having DBNs 1000, 1200, and 1300 are depicted with dashed line in the VOL-A_{PTI_0} PTI to convey the absence of the actual data content within the VOL-A_{PTI_0} PTI itself. The changes to the file system further include modification of FBN 0 of *file2* so that the data content of *file2* FBN 0 matches the data content of FBN 3 of *file1* which points to DBN 1300 within the *file1* inode. In response to detecting the data block modification, a block-level deduplication cycle has modified the block pointer for *file2* FBN 0 to point to DBN 1300. FBN 1 of *file2* has also been modified so that the *file2* FBN1 inode pointer has been changed to point to where the modified data block resides at DBN 1600. The foregoing modifications to block pointers in the inodes that represent *file1* and *file2* result in corresponding modifications to the metadata for *dir1.* In addition to the modifications to *file1* and *file2,* a new file system entity, *file3,* has been added to *dir1* as shown in the representative file tree structure for the VOL-A_{PTI_1} PTI. The *file3* entity is represented by a newly assigned inode (not depicted) that includes a block pointer from FBN 0 to DBN 1700.

As depicted and described with reference to **FIG. 1****,** a storage server such as file server **202** may execute replication cycles in which the file system storage volume **204** is replicated as a backup image in OBS. The objects for the file-system-to-OBS replication are generated by a replication engine **215** using a data layout that preserves the storage management operations (e.g., storage snapshot and deduplication) that are available in the file system and with block level storage. The secondary (or backup) storage system is embodied within a cloud system **230** that is communicatively connected to file server **202** via a network **220.** In the example illustration, a file system client may replicate data from file system storage volume **204** to object storage containers **234** and **236** within cloud system **230.** Cloud system **230** includes numerous devices and program instances ("modules"), but only a few are depicted in **FIG. 2** to avoid unduly complicating the figure.

The depicted cloud system **230** includes an OBS server **232** that provides access to and manages object containers **234** and **236.** Object container **234** has an assigned container name, PTI_0, and corresponds to a PTI for VOL-A at the time the VOL-A_{PTI_0} PTI was the active file system image (i.e., at the point at which the VOL-A_{PTI_0} PTI was recorded). The container name may be included in HTTP URLs to locate and access objects within the container. Object container **234** further includes multiple objects that were generated in the same or similar manner as that described in **FIG. 1** for the baseline replication of file system data to OBS objects. **FIG. 2** depicts the objects within container **234** in a simplified, single box form for purposes of illustrative simplicity. Namely, object container **234** includes an I.REF object and an I.DAT object that respectively correspond in structure and detail to inode reference object **138** and inode data object **140** depicted in **FIG. 1****.** The illustrated pointer from I.REF to I.DAT represents the index correspondence between the inode file FBN entries in I.REF and the inode number and metadata attribute entries in I.DAT. Object container **234** further includes indirection objects that are represented in **FIG. 2** as a single box, INDIR. The indirection objects are generated, such as during a baseline replication cycle in the same or similar manner as depicted and described for the generation of indirection objects **134** in **FIG. 1****.** The depicted pointer from the I.DAT object to the INDIR objects represents the logical association between the I.DAT object inode number data and the object IDs of the INDIR objects that are the same as or otherwise directly correspond to the inode numbers. Object container **234** further includes a D.REF object and a D.DAT object that respectively correspond in structure and detail to data reference object **152** and data content object **154** depicted in **FIG. 1****.** The depicted pointer from the INDIR objects to D.REF represents the logical association between the DBNs included in the block pointer entries of the indirection objects and the DBNs listed as sequential, indexed data entries within D.REF. The illustrated pointer from D.REF to D.DAT represents the index correspondence between the DBN entries in D.REF and the data block entries in D.DAT.

At a specified replication period or in response to an event-based trigger, such as a client request for replication, file server **202** initiates an incremental replication of the data within VOL-A that has been modified from the point at which object container **234** was generated and recorded to include the aforementioned modifications reflected in the VOL-A_{PTI_1} PTI. In an embodiment, file server **202** transmits a replication request including or followed by a replication stream that comprises a stream of file system entities **205.** As depicted, the replication stream of file system entities **205** includes inodes as well as indexed file systems entities such as files and directories. Specifically, file system entities **205** include the modified data blocks for file1 and file2 that have been written to new locations having DBNs 1500 and 1600. The replication stream also includes the new data block at DBN 1700 that contains the data content of new file3. File system entities **205** further includes file inodes *i_140* and *i_160.* Referring to **FIG. 1** in conjunction with **FIG. 2****,** inode *i_140* (representing *file1*) and inode *i_160* (representing *file2*) are included in the replication stream due to updates in the respective inode block pointers. Directory inode *i_100* is included in the replication stream due to changes to *dir1* metadata and directory inode *i_130* that represents new *file3* is also included.

File server **202** communicates with a replication engine **215** to perform full (baseline) or incremental (difference between PTIs) replications of the file system into OBS objects stored within cloud system **230** via OBS server **232.** In the depicted embodiment, replication engine **215** comprises a replication buffer **206,** a parser **208,** an object mapper **210,** and a protocol interface library **212.** Replication buffer **206** initially receives and processes the replication stream generated by file server **202.** Specifically, replication buffer **206** may be configured to sequentially order the received data blocks, inodes, and possibly other file system entities for optimal processing by parser **208** and object mapper **210.** Parser **208** is configured, using any combination of coded software, firmware, and/or hardware, to selectively identify and interpret each of the file system entities **205** in a given replication stream and to provide the resultant identified entity and sub-entity information to object mapper **210.** For example, parser **208** may be configured to identify data blocks 1500, 1600, and 1700 as data blocks and to read the respective DBNs. Parser **208** may also be configured to read and associate the respective data block content with each of the DBNs. For received inodes, parser **208** may be configured to identify inodes i_140, i_160, i_100, and i_130 and read the respective metadata content as well as the block pointers. Object mapper **210** is configured, using any combination of coded software, firmware, and/or hardware, to map the parsed portions of the file system entities into object such as within object container **236** for the incremental replication of the difference between the VOL-A_{PTI_0} PTI and the VOL-A_{PTI_1} PTI.

Object container **236** is depicted in **FIG. 2** as including the objects generated by replication engine **215** from replication stream entities **205.** Included among the incremental replication objects are inode reference object **238** and inode data object **240.** Inode reference object **238** includes an object ID, *IFILE.REF,* and a set of indexed entries each comprising an inode file FBN within which the respective inode is contained. For instance, the third entry (indexed as "2") in inode reference object **238** comprises FBN "6", which is the inode file FBN in which the corresponding inode i_140 is contained. Inode data object **240** includes an object ID, *IFILE.DAT,* and a set of indexed entries each comprising the metadata for a respective one of the file system entities represented by the inode. For example, the second entry (indexed as "1) in inode data object **240** comprises the attribute metadata (i.e., metadata except for block pointers) for *file3* that was added in the VOL-A_{PTI_1} PTI is represented by new inode *i_130.*

Object container **236** further includes indirection object 242 that was mapped/generated by replication engine **215** using parsed information from directory inode 100. As depicted, the content of indirection object **242** comprises a pointer from FBN 0 of *dir1* to the new location (DBN 2104) of the data block corresponding to *dir1* FBN0. Indirection objects **244, 246,** and **248** are mapped/generated by replication engine **215** using parsed information from file inodes 130, 140, and 160, respectively. Indirection object **244** is itself an addition to the set of indirection objects included in object container **234** for PTI_0 due to the addition of a new file, *file3.* Indirection objects **246** and **248** include highlighted modifications from the corresponding indirection objects within container **234.** Namely, indirection object **246** includes a new block pointer from FBN 1 to DBN 1500, and for indirection object **248** the previous pointers from FBNs 0 and 1 to DBNs 1200 and 1400 have been replaced by pointers to DBNs 1300 and 1600.

To address the changes to data blocks, reflected in DBNs 1500, 1600, and 1700, object container **236** further includes a data reference object **250** and a data content object **252.** As shown, the indexing between the entries of data reference object **250** and data content object **252** is mutually consistent and based on the data blocks received in the replication stream.

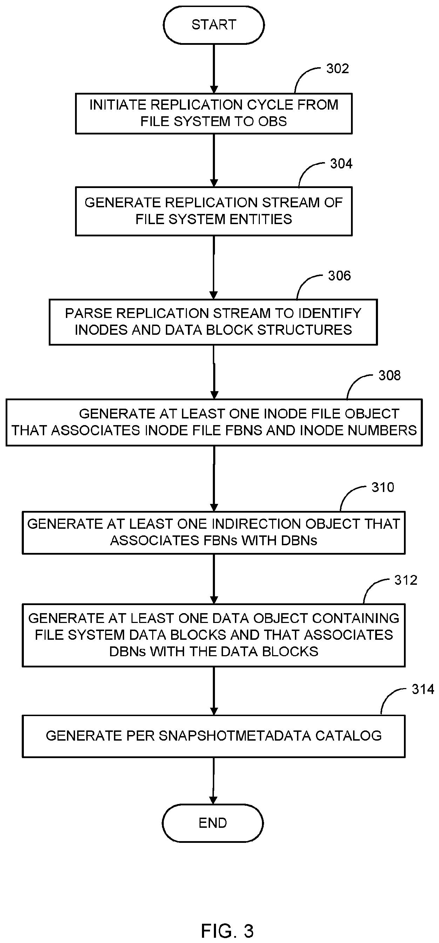

**FIG. 3** is a flow diagram illustrating operations and functions performed during storage replication in accordance with an embodiment. The process begins as shown at block **302** with a replication engine receiving a signal indicating initiation of a replication cycle from a primary file system source storage to an OBS secondary system. Next, at block **304** the replication engine generates a stream of data items from a file system to be replicated to OBS. For example, the data stream may include the data structures and other file system entities included within a point-in-time image (PTI) (sometimes referred to as a snapshot) of the file system. In an embodiment, the file system entities include one or more data blocks that have been deduplicated and one or more inodes that specify the corresponding deduplicated data block pointers. The process continues as shown at block **306** with a parser parsing the data stream of replication data to identify inode metadata, inode reference pointers, and data blocks.

At block **308** the replication engine generates one or more inode file objects that individually or collectively associate FBNs of the inode file with inode numbers of the inodes received in the replication stream. Next, the replication engine generates one or more indirection objects that each logically associate FBNs of indexed file system entities (files or directories) with respective DBNs of the data blocks received in the replication stream (block **310).** In an embodiment, each of the indirection objects is assigned an object access key name that corresponds to a single inode number. The replication engine generates a third object category in addition to the inode file objects and indirection objects. Namely, the replication engine generates one or more data objects that contain the data blocks received in the replication stream and that also logically associate the data block numbers with the data blocks (block **312**)**.**

During or following the object generation at blocks **308, 310,** and **312,** the replication engine also generates a per-snapshot metadata catalog at block **314.** For example, the parser may further process the replication data stream to identify and designate file system entities as "inode number," "parent inode number," "file type," "PTI," "absolute path," and "operation." In response, an object mapper such as that depicted in **FIG. 2** may generate a metadata catalog having per-snapshot entries, and wherein each of the per-snapshot entries includes fields for "inode number," "parent inode number," "file type," "PTI," "absolute path," and "operation." The generated metadata catalog can be utilized during data recovery from the secondary system. For example, the information in the catalog may enable more efficient querying of a file system directory and its content for a particular snapshot. The catalog further enables querying of a filename across different pathnames and different snapshots.

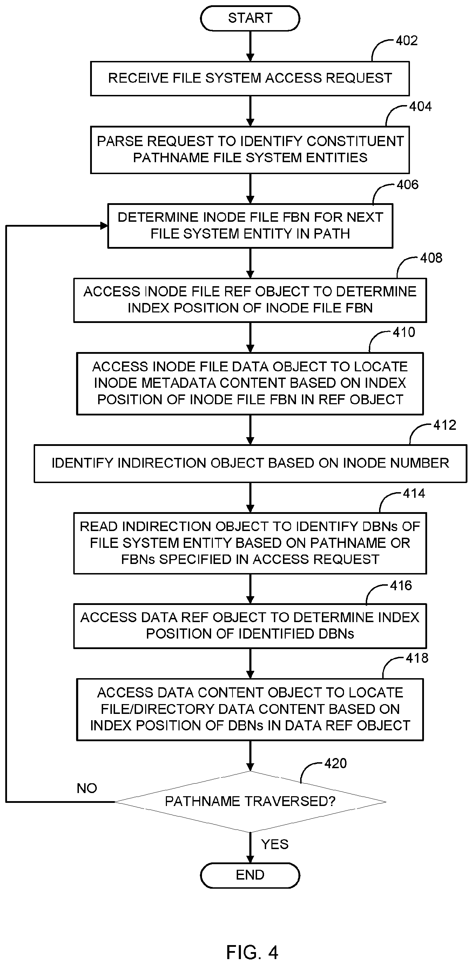

**FIG. 4** is a flow diagram illustrating operations and functions performed for translating between file system block-level access and OBS object access in accordance with an embodiment. The process begins at block **402** with an OBS bridge receiving a file system access request such as may be transmitted from a file server hosting a file system storage that is replicated to OBS as described with reference to **FIGS. 1-3****.** In an embodiment, the OBS bridge is configured to map file system read requests to corresponding OBS requests that enable effective access to block-level data. At block **404,** the OBS bridge parses the request to identify the file system entities, beginning with the file system root directory included in the request pathname. Having parsed the pathname, the OBS bridge begins with the root directory entity and determines a corresponding inode file FBN (block **406**) that will be used to locate attribute metadata in the inode file objects. At block **408,** the OBS bridge accesses an inode file reference object to determine the index position of the inode file FBN. Next at block **410,** the OBS bridge accesses an inode file data object and uses the determined index position to locate the metadata content entry for the corresponding file system entity.

Having read the metadata content, the OBS bridge identifies one of the indirection objects based on the object ID (key) of the identified indirection object matching the inode number of the file system entity (block **412**). At block **414,** the OBS bridge uses the pathname and/or FBNs specified therein to selectively read the identified indirection object to identify DBNs containing the data content of the file system entity. Next, the OBS bridge accesses a data reference object and uses the identified DBNs to determine their respective indexed positions within the indexed list of entries (block **416**). The OBS bridge then uses the indexed position information to locate the file or directory content entries within a data content object (block **418**). The process then iterates through the pathname until the requested data (e.g., one or more file blocks of a file) is retrieved as shown by the cycle from block **420** and control passing back to block **406.**

### Variations

The flowcharts are provided to aid in understanding the illustrations and are not to be used to limit scope of the claims. The flowcharts depict example operations that can vary within the scope of the claims. Additional operations may be performed; fewer operations may be performed; the operations may be performed in parallel; and the operations may be performed in a different order. It will be understood that each block of the flowchart illustrations and/or block diagrams, and combinations of blocks in the flowchart illustrations and/or block diagrams, can be implemented by program code. The program code may be provided to a processor of a general purpose computer, special purpose computer, or other programmable machine or apparatus.

As will be appreciated, aspects of the disclosure may be embodied as a system, method or program code/instructions stored in one or more machine-readable media. Accordingly, aspects may take the form of hardware, software (including firmware, resident software, microcode, etc.), or a combination of software and hardware aspects that may all generally be referred to herein as a "circuit," "module" or "system." The functionality provided as individual modules/units in the example illustrations can be organized differently in accordance with any one of platform (operating system and/or hardware), application ecosystem, interfaces, programmer preferences, programming language, administrator preferences, etc.

Any combination of one or more machine readable medium(s) may be utilized. The machine readable medium may be a machine readable signal medium or a machine readable storage medium. A machine readable storage medium may be, for example, but not limited to, a system, apparatus, or device, that employs any one of or combination of electronic, magnetic, optical, electromagnetic, infrared, or semiconductor technology to store program code. More specific examples (a non-exhaustive list) of the machine readable storage medium would include the following: a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a machine readable storage medium may be any tangible medium that can contain, or store a program for use by or in connection with an instruction execution system, apparatus, or device. A machine readable storage medium is not a machine readable signal medium.

A machine readable signal medium may include a propagated data signal with machine readable program code embodied therein, for example, in baseband or as part of a carrier wave. Such a propagated signal may take any of a variety of forms, including, but not limited to, electro-magnetic, optical, or any suitable combination thereof. A machine readable signal medium may be any machine readable medium that is not a machine readable storage medium and that can communicate, propagate, or transport a program for use by or in connection with an instruction execution system, apparatus, or device.

Program code embodied on a machine readable medium may be transmitted using any appropriate medium, including but not limited to wireless, wireline, optical fiber cable, RF, etc., or any suitable combination of the foregoing.

Computer program code for carrying out operations for aspects of the disclosure may be written in any combination of one or more programming languages, including an object oriented programming language such as the Java^{®} programming language, C++ or the like; a dynamic programming language such as Python; a scripting language such as Perl programming language or PowerShell script language; and conventional procedural programming languages, such as the "C" programming language or similar programming languages. The program code may execute entirely on a stand-alone machine, may execute in a distributed manner across multiple machines, and may execute on one machine while providing results and or accepting input on another machine.

The program code/instructions may also be stored in a machine readable medium that can direct a machine to function in a particular manner, such that the instructions stored in the machine readable medium produce an article of manufacture including instructions which implement the function/act specified in the flowchart and/or block diagram block or blocks.

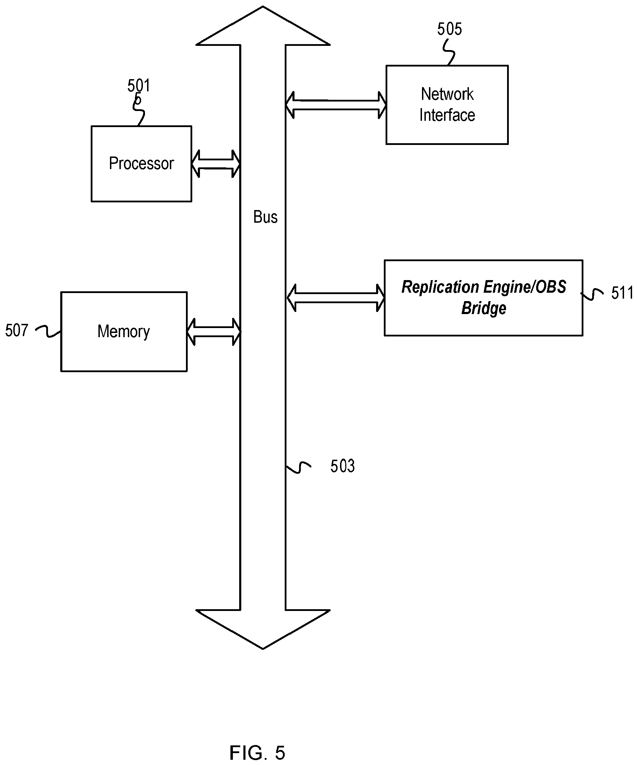

**FIG. 5** depicts an example computer system with an object-based replication and recovery appliance in accordance with an embodiment. The computer system includes a processor unit **501** (possibly including multiple processors, multiple cores, multiple nodes, and/or implementing multi-threading, etc.). The computer system includes memory **507.** The memory **507** may be system memory (e.g., one or more of cache, SRAM, DRAM, zero capacitor RAM, Twin Transistor RAM, eDRAM, EDO RAM, DDR RAM, EEPROM, NRAM, RRAM, SONOS, PRAM, etc.) or any one or more of the above already described possible realizations of machine-readable media. The computer system also includes a bus **503** (e.g., PCI, ISA, PCI-Express, HyperTransport^{®} bus, InfiniBand^{®} bus, NuBus, etc.) and a network interface **505** (e.g., a Fiber Channel interface, an Ethernet interface, an internet small computer system interface, SONET interface, wireless interface, etc.). The system also includes a replication engine **511.** The replication engine **511** processes replication and recovery requests, transactions, and data for servicing a source storage system and/or one or more storage clients. Any one of the previously described functionalities may be partially (or entirely) implemented in hardware and/or on the processor unit **501.** For example, the functionality may be implemented with an application specific integrated circuit, in logic implemented in the processor unit **501,** in a coprocessor on a peripheral device or card, etc. Further, realizations may include fewer or additional components not illustrated in **FIG. 5** (e.g., video cards, audio cards, additional network interfaces, peripheral devices, etc.). The processor unit **501** and the network interface **505** are coupled to the bus **503.** Although illustrated as being coupled to the bus **503,** the memory **507** may be coupled to the processor unit **501.**

In general, techniques for a replicating file system storage into object-based storage as described herein may be implemented with facilities consistent with any hardware system or hardware systems. Many variations, modifications, additions, and improvements are possible.

Plural instances may be provided for components, operations or structures described herein as a single instance. Finally, boundaries between various components, operations and data stores are somewhat arbitrary, and particular operations are illustrated in the context of specific illustrative configurations. Other allocations of functionality are envisioned and may fall within the scope of the invention, which is as defined in claim 1. In general, structures and functionality shown as separate components in the example configurations may be implemented as a combined structure or component. Similarly, structures and functionality shown as a single component may be implemented as separate components.

## Claims

1. A method for managing file system entities in an object-based storage, OBS, (130) system, wherein the OBS system integrates or ingests variable size data items as a plurality of OBS objects, wherein each of the plurality of OBS objects has a unique identification, ID, key, wherein each of the plurality of OBS objects is stored in a flat namespace structure of the OBS system, the flat namespace structure being allocated within a given logical container, wherein OBS object metadata is stored with the OBS object itself rather than in a separate metadata structure, said method comprising:
receiving a stream of file system entities that include inodes (i_64, i_100, i_120, i_140, i_160) contained within an inode file (120) and having respective assigned file index (64, 100, 120, 140, 160) numbers utilized to index file system entities, and data blocks (2000, 2100, 2200, 1000, 1100, 1200, 1300, 1400); and
mapping the file system entities to OBS objects, said mapping comprising:
generating at least one inode file object (132) that logically associates file block numbers, FBNs, (3, 4, 5, 6, 7) of the inode file with the file index numbers;
generating at least one indirection object (134) that logically associates FBNs of indexed file system entities with respective ones of data block numbers (2000, 2100, 2200, 1000, 1100, 1200, 1300, 1400) corresponding to the received data blocks; and
generating at least one data object (136) that contains the data blocks and that
logically associates the data block numbers with the data blocks,
wherein the plurality of OBS objects comprises the at least one inode file object, the at least one indirection object, and the at least one data object.

2. The method of claim 1, wherein said generating at least one inode file object comprises:
generating an inode file reference object (138) that includes an ordered list of FBNs of the inode file.

3. The method of claim 1 or 2, wherein said generating at least one indirection object comprises assigning to each indirection object, an object ID (I_64, I_100, I_120, I_140, I_{_}160) that corresponds to a respective one of the file index numbers and that is used as an object access key.

4. The method of any preceding claim, wherein said generating at least one data object comprises:
generating a data reference object (152) that includes an ordered list of the data block numbers and a data content object (154) that includes a per-block, ordered list of data content of the respective data blocks.

5. The method of claim 4, further comprising:
accessing, in response to a request to access an indexed file system entity within the OBS, an identified indirection object to identify one or more data block numbers that are associated, within the identified indirection object, with a file system entity that is within a file system pathname of the indexed file system entity.

6. The method of claim 5, wherein said accessing the identified indirection object comprises identifying the data block numbers based on at least one FBN specified by the access request.

7. The method of claim 5 or 6, further comprising:
in response to the request to access the indexed file system entity, accessing one or more entries within the at least one data object based on the identified one or more data block numbers.

8. The method of any preceding claim, further comprising:
parsing the stream of file system entities to identify the data blocks and the inodes; and
parsing the inodes to identify attribute metadata and reference data (111, 113, 117) that associate FBNs with data block numbers.

## Patentansprüche

1. Verfahren zum Verwalten von Dateisystem-Entitäten in einem objektbasierten Datenspeichersystem, Object-Based Storage System (OBS-System), (130), wobei das OBS-System Datenelemente variabler Größe als eine Mehrzahl von OBS-Objekten integriert oder aufnimmt, wobei jedes der Mehrzahl von OBS-Objekten über einen eindeutigen Identifikationsschlüssel (ID-Schlüssel) verfügt, wobei jedes der Mehrzahl von OBS-Objekten in einer flachen Namensraumstruktur des OBS-Systems gespeichert ist, wobei die flache Namensraumstruktur innerhalb eines gegebenen logischen Containers zugeteilt ist, wobei OBS-Objekt-Metadaten mit dem OBS-Objekt selbst gespeichert sind statt in einer separaten Metadatenstruktur, wobei das Verfahren umfasst:
Empfangen eines Stroms von Dateisystem-Entitäten, beinhaltend Inodes (i_64, i_100, i_120, i_140, i_160), welche in einer Inode-Datei (120) enthalten sind und jeweilige zugewiesene Dateiindexnummern (64, 100, 120, 140, 160) aufweisen, die genutzt werden, um Dateisystem-Entitäten zu indizieren, und Datenblöcke (2000, 2100, 2200, 1000, 1100, 1200, 1300, 1400); und
Abbilden der Dateisystem-Entitäten auf OBS-Objekte, wobei das Abbilden umfasst:
Generieren wenigstens eines Inode-Dateiobjekts (132), das Dateiblocknummern, File Block Numbers (FBNs), (3, 4, 5, 6, 7) der Inode-Datei mit den Dateiindexnummern logisch verknüpft;
Generieren wenigstens eines Indirektionsobjekts (134), das FBNs indizierter Dateisystem-Entitäten mit jeweiligen Nummern von Datenblocknummern (2000, 2100, 2200, 1000, 1100, 1200, 1300, 1400), welche den empfangenen Datenblöcken entsprechen, logisch verknüpft; und Generieren wenigstens eines Datenobjekts (136), das die Datenblöcke enthält und das die Datenblocknummern mit den Datenblöcken logisch verknüpft,
wobei die Mehrzahl von OBS-Objekten das wenigstens eine Inode-Dateiobjekt, das wenigstens eine Indirektionsobjekt und das wenigstens eine Datenobjekt umfasst.

2. Verfahren nach Anspruch 1, wobei das Generieren wenigstens eines Inode-Dateiobjekts umfasst:
Generieren eines Inode-Dateireferenzobjekts (138), das eine geordnete Liste von FBNs der Inode-Datei beinhaltet.

3. Verfahren nach Anspruch 1 oder 2, wobei das Generieren wenigstens eines Indirektionsobjekts das Zuweisen zu jedem Indirektionsobjekt, einer Objekt-ID (I_64, I_100,I_120, I_140, I_160) umfasst, die einer jeweiligen Nummer der Dateiindexnummern entspricht und die als ein Objektzugriffsschlüssel verwendet wird.

4. Verfahren nach einem der vorstehenden Ansprüche, wobei das Generieren wenigstens eines Datenobjekts umfasst:
Generieren eines Datenreferenzobjekts (152), das eine geordnete Liste der Datenblocknummern beinhaltet, und eines Dateninhaltobjekts (154), das eine blockbezogene geordnete Liste von Dateninhalten der jeweiligen Datenblöcke beinhaltet.

5. Verfahren nach Anspruch 4, ferner umfassend:
Zugreifen, in Reaktion auf eine Anforderung, auf eine indizierte Dateisystem-Entität in dem OBS zuzugreifen, auf ein identifiziertes Indirektionsobjekt, um eine oder mehrere Datenblocknummern zu identifizieren, die in dem identifizierten Indirektionsobjekt mit einer Dateisystem-Entität verknüpft sind, welche sich in einem Dateisystem-Pfadnamen der indizierten Dateisystem-Entität befindet.

6. Verfahren nach Anspruch 5, wobei das Zugreifen auf das identifizierte Indirektionsobjekt das Identifizieren der Datenblocknummern umfasst, basierend auf wenigstens einer FBN, die durch die Zugriffsanforderung spezifiziert ist.

7. Verfahren nach Anspruch 5 oder 6, ferner umfassend: in Reaktion auf die Anforderung zum Zugreifen auf die indizierte Dateisystem-Entität, Zugreifen auf einen oder mehrere Einträge in dem wenigstens einen Datenobjekt basierend auf den identifizierten ein oder mehreren Datenblocknummern.

8. Verfahren nach einem der vorstehenden Ansprüche, ferner umfassend:
Analysieren des Stroms von Dateisystem-Entitäten, um die Datenblöcke und die Inodes zu identifizieren; und Analysieren der Inodes, um Attribut-Metadaten und Referenzdaten (111, 113, 117) zu identifizieren, die FBNs mit Datenblocknummern verknüpfen.

## Revendications

1. Procédé de gestion d'entités de système de fichiers dans un système de stockage basé sur les objets, OBS, (130) le système OBS intégrant ou acquérant des éléments de données de taille variable sous la forme d'une pluralité d'objets OBS, chacun de la pluralité d'objets OBS possédant une clé d'identification unique, ID, où chacun de la pluralité d'objets OBS est stocké dans une structure d'espace de noms plane du système OBS, la structure d'espace de noms plate étant allouée dans un conteneur logique donné, où les métadonnées d'objet OBS sont stockées avec l'objet OBS lui-même plutôt que dans une structure de métadonnées séparée, ledit procédé comprenant les étapes suivantes :
recevoir un flux d'entités de système de fichiers comprenant des noeuds d'index (i_64, i_100, i_120, i_140, i_160) contenus dans un fichier de noeuds d'index (120) et ayant des numéros d'index de fichier respectifs (64, 100, 120, 140, 160) utilisés pour indexer les entités de système de fichiers, et des blocs de données (2000, 2100, 2200, 1000, 1100, 1200, 1300, 1400) ; et
mettre en correspondance les entités de système de fichiers avec les objets OBS, ladite mise en correspondance comprenant les étapes suivantes :
générer au moins un objet fichier de noeud d'index (132) qui associe logiquement les numéros de bloc de fichier, FBN, (3, 4, 5, 6, 7) du fichier de noeud d'index aux numéros d'index de fichier ;
générer au moins un objet d'indirection (134) qui associe logiquement les FBN des entités de système de fichiers indexées aux numéros respectifs des numéros de blocs de données (2000, 2100, 2200, 1000, 1100, 1200, 1300, 1400) correspondant aux blocs de données reçus ; et
générer au moins un objet de données (136) qui contient les blocs de données et qui associe logiquement les numéros de blocs de données aux blocs de données,
où la pluralité d'objets OBS comprend au moins un objet de fichier de noeud d'index, l'au moins un objet d'indirection et l'au moins un objet de données.

2. Procédé selon la revendication 1, dans lequel ladite génération d'au moins un objet de fichier de noeud d'index comprend l'étape suivante :
générer un objet de référence de fichier de noeud d'index (138) qui comprend une liste ordonnée de FBN du fichier de noeud d'index.

3. Procédé selon la revendication 1 ou la revendication 2, dans lequel ladite génération d'au moins un objet d'indirection comprend l'attribution, à chaque objet d'indirection, d'un ID d'objet (I_64, 1_100, 1_120, I_140, I_160) qui correspond à un numéro respectif des numéros d'index de fichier et qui est utilisé comme clé d'accès à l'objet.

4. Procédé selon l'une quelconque des revendications précédentes, dans lequel ladite génération d'au moins un objet de données comprend l'étape suivante :
générer un objet de référence de données (152) qui comprend une liste ordonnée des numéros de blocs de données et un objet de contenu de données (154) qui comprend, par bloc, une liste ordonnée de contenu de données des blocs de données respectifs.

5. Procédé selon la revendication 4 comprenant en outre les étapes suivantes :
accéder, en réponse à une demande d'accès à une entité de système de fichiers indexée dans l'OBS, à un objet d'indirection identifié pour identifier un ou plusieurs numéros de blocs de données qui sont associés, dans l'objet d'indirection identifié, à une entité de système de fichiers qui se trouve dans un nom de chemin de système de fichiers de l'entité de système de fichiers indexée.

6. Procédé selon la revendication 5, dans lequel ledit accès à l'objet d'indirection identifié comprend l'identification des numéros de blocs de données sur la base d'au moins un FBN spécifié par la demande d'accès.

7. Procédé selon la revendication 5 ou la revendication 6, comprenant en outre l'étape suivante :
en réponse à la demande d'accès à l'entité de système de fichiers indexée, accéder à une ou plusieurs entrées dans l'au moins un objet de données sur la base des un ou plusieurs numéros de blocs de données identifiés.

8. Procédé selon l'une quelconque des revendications précédentes, comprenant en outre les étapes suivantes : analyser le flux d'entités de système de fichiers pour identifier les blocs de données et les noeuds d'index ; et
analyser les noeuds d'index pour identifier les métadonnées d'attributs et les données de référence (111, 113, 117) qui associent les FBN aux numéros de blocs de données.
